# EUROPEAN PATENT APPLICATION

(11) **EP 4 757 386 A1**
(43) Date of publication of application: **10.06.2026**
(21) Application number: 24851679.1
(22) Date of filing: 30.07.2024
(51) Int. Cl.: H04W 24/02, H04W 24/10, H04W 76/10, H04W 84/12

(54) **COMMUNICATION DEVICE AND COMMUNICATION METHOD**

(30) Priority: 04.08.2023 JP 2023127890
(71) Applicant: Panasonic Intellectual Property Corporation of America, Torrance, CA 90504 (US)
(72) Inventor: NAKANO, Takayuki, Kadoma-shi, Osaka 571-0057 (JP); MOTOZUKA, Hiroyuki, Kadoma-shi, Osaka 571-0057 (JP); URABE, Yoshio, Kadoma-shi, Osaka 571-0057 (JP)
(74) Representative: Grünecker Patent- und Rechtsanwälte PartG mbB
(86) International application number: PCT/JP2024/027133
(87) International publication number: WO 2025/033254

(57) **Abstract**

This communication device comprises: a control circuit for performing at least one of an artificial intelligence (AI)/machine learning (ML) model configuration, a parameter configuration for the AI/ML model, and a data-related configuration used in the AI/ML model, in accordance with a type related to the sharing, among communication devices, of information related to the AI/ML model; and a transmission circuit for transmitting information corresponding to the at least one setting to the other communication device.

## Description

### Technical Field

The present disclosure relates to a communication apparatus and a communication method.

### Background Art

Artificial intelligence (AI) or machine learning (ML) technology for a wireless local area network (LAN) (hereinafter, the wireless LAN is referred to as WLAN) is being studied in academia and industry (for example, Non-Patent Literature (hereinafter, referred to as "NPL") 1).

In the Institute of Electrical and Electronics Engineers (IEEE) 802.11 committee, a Topic Interest Group (TIG) related to AI/ML (hereinafter, also referred to as AIML) was established in July 2022, and the study has been started (for example, NPL 2).

As one of use cases in a case of applying AI/ML to the wireless LAN, a method of sharing an AI/ML model, a parameter, and/or the like between communication apparatuses is being studied (for example, NPLs 4 and 5).

### Citation List

### Non-Patent Literature

NPL 1
   S. Szott, K. Kosek-Szott, P. Gawlowicz, J. T. Gomez, B. Bellalta, A. Zubow, F. Dressler, "WiFi Meets ML: A Survey on Improving IEEE 802.11 Performance with Machine Learning" IEEE Communications Surveys & Tutorials, vol.24, no.3, pp.1843-1893
NPL 2
   IEEE 802.11-22/847r3, AIML TIG July 2022 Agenda
NPL 3
   IEEE 802.11-22/950r2, Discussion on Connection between AI/ML & Wireless LAN
NPL 4
   IEEE 802.11-23/905r0, Proposed technical report text for AIML model sharing use case
NPL 5
   IEEE 802.11-23/750r0, Discussions on Neural Network Model Sharing for WLAN

### Summary of Invention

A method of appropriately sharing information related to AI/ML, such as information on an AI/ML model and/or a parameter, between communication apparatuses has not been sufficiently studied.

A non-limiting exemplary embodiment of the present disclosure contributes to the provision of a communication apparatus and a communication method capable of appropriately sharing information related to AI/ML between communication apparatuses.

A communication apparatus according to one exemplary embodiment of the present disclosure includes: control circuitry, which, in operation, performs at least one setup of a setup of an Artificial Intelligence (Al)/Machine Learning (ML) model, a setup of a parameter of the AI/ML model, and a setup of data used in the AI/ML model in accordance with a type associated with sharing of information related to the AI/ML model between communication apparatuses; and transmission circuitry, which, in operation, transmits information corresponding to the at least one setup to another communication apparatus.

Note that general or specific embodiments may be implemented as a system, an apparatus, a method, an integrated circuit, a computer program, a storage medium, or any selective combination thereof.

According to one exemplary embodiment of the present disclosure, information related to AI/ML can be appropriately shared between communication apparatuses.

Additional benefits and advantages of the disclosed embodiments will become apparent from the specification and drawings. The benefits and/or advantages may be individually obtained by the various embodiments and features of the specification and drawings, which need not all be provided in order to obtain one or more of such benefits and/or advantages.

### Brief Description of Drawings

FIG. 1 is a diagram showing an example of a type related to the transfer of an AI/ML model to each terminal and the provision of AI/ML parameters;
FIG. 2 is a diagram showing an exemplary control operation of type 1 in which no inter-terminal transfer of the AI/ML model and the AI/ML parameters is performed;
FIG. 3 is a diagram showing an exemplary control operation of type 2 in which inter-terminal transfer of the AI/ML parameters is performed;
FIG. 4 is a diagram showing an exemplary control operation of type 3 in which inter-terminal transfer of the AI/ML model and the AI/ML parameters is performed;
FIG. 5 is a diagram showing an example of a definition of an AIML Measurement Type;
FIG. 6 is a diagram showing an exemplary configuration in a case where the AI/ML model is a neural network (NN) model;
FIG. 7 is a diagram showing an example of a format of a Measurement Request element;
FIG. 8 is a diagram showing an example of a definition of an AIML Measurement Type;
FIG. 9 is a diagram showing an example of a conversion method of a Measurement element;
FIG. 10 is a diagram showing an example of a format of a Data collection element;
FIG. 11 is a diagram showing an example of a format of an NDP Announcement frame;
FIG. 12 is a diagram showing an example of a format of a Sounding Dialog Token field in the NDP Announcement frame;
FIG. 13 is a diagram showing an example of a definition of the NDP Announcement frame variant;
FIG. 14 is a diagram showing an example of a format of a STA Info field in a case of an EHT NDP Announcement frame;
FIG. 15 is a diagram showing an example of a format of a STA Info field in a case of an AIML NDP Announcement frame;
FIG. 16 is a diagram showing an example of a definition of an AID11 subfield in the NDP Announcement frame;
FIG. 17 is a diagram showing an example of a definition of a Data collection frame for each application/use case;
FIG. 18 is a diagram showing an exemplary control operation in a case where Data collection is performed in an application layer;
FIG. 19A is a diagram showing an example of a format of an Action frame;
FIG. 19B is a diagram showing an example of a format of the Action frame;
FIG. 19C is a diagram showing an example of a definition of an AI/ML Algorithm ID (AIML Algorithm ID);
FIG. 20A is a diagram showing an example of a format of an AIML model element;
FIG. 20B is a diagram showing an example of a format of an AIML parameter element;
FIG. 20C is a diagram showing an example of a format of an AIML model parameter element;
FIG. 20D is a diagram showing an example of a definition of an AI/ML Algorithm ID (AIML Algorithm ID);
FIG. 21A is a diagram showing an example of a format of an AIML model setup frame;
FIG. 21B is a diagram showing an example of a format of an AIML parameter setup frame;
FIG. 21C is a diagram showing an example of a format of an AIML model parameter setup frame;
FIG. 21D is a diagram showing an example of a definition of an AI/ML Algorithm ID (AIML Algorithm ID);
FIG. 22 is a diagram showing an example of an Output parameter report for each AIML Measurement Type;
FIG. 23 is a diagram showing an exemplary operation after the Output parameter report for each AIML Measurement Type;
FIG. 24 is a diagram showing an example of a configuration of a Controller Node; and
FIG. 25 is a diagram showing an example of a configuration of the Controlled Node.

### Description of Embodiments

Hereinafter, each embodiment of the present disclosure will be described in detail with reference to the drawings.

### (Embodiment 1)

As described above, the application of AI/ML to a wireless LAN has been studied. For example, in an AI/ML model such as a neural network, training (or learning) is performed, a parameter of the AI/ML model (hereinafter, referred to as AI/ML parameters) is set up, and a parameter suitable for communication of the wireless LAN is determined by inference of the AI/ML model. As one of use cases in a case of applying AI/ML to a wireless LAN, a method of sharing information related to AI/ML, such as an AI/ML model or AI/ML parameters, between communication apparatuses has been studied.

In Embodiment 1 of the present disclosure, a scheme is adopted in which Data collection request/response, AIML model setup, and AIML parameter setup are selected and shared between terminals in accordance with a type related to the transfer of the AI/ML model to each terminal or the provision of the AI/ML parameters. The AIML model may be referred to as an AI/ML model or an AI model.

### <Exemplary Three Types>

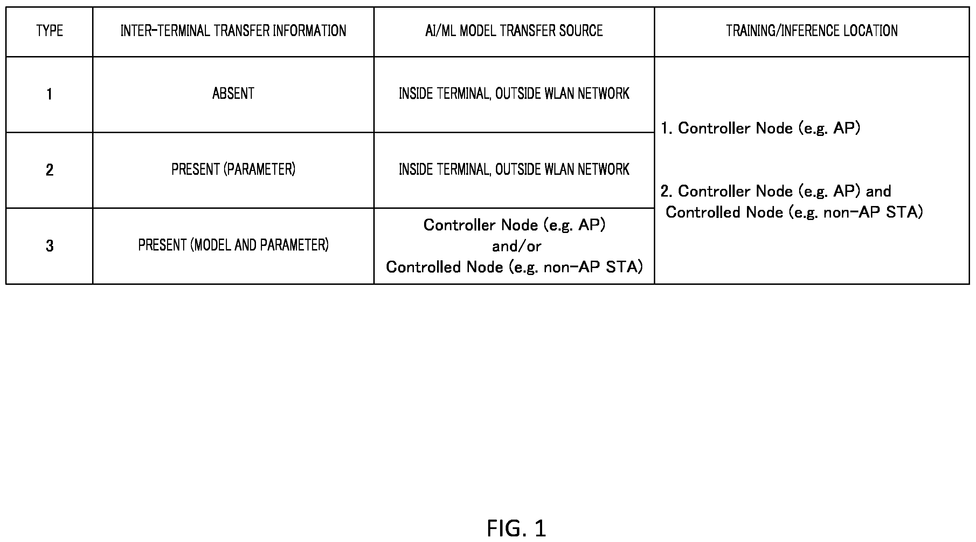

FIG. 1 is a diagram showing an example of a type related to the transfer of an AI/ML model to each terminal and the provision of AI/ML parameters. The Controller Node (for example, an Access Point (hereinafter, AP)) and the Controlled Node (for example, a non-AP Station (hereinafter, non-AP STA)) are each an example of a terminal. In addition, the Controller Node (for example, the AP) and the Controlled Node (for example, the non-AP STA) may be referred to as a communication apparatus.

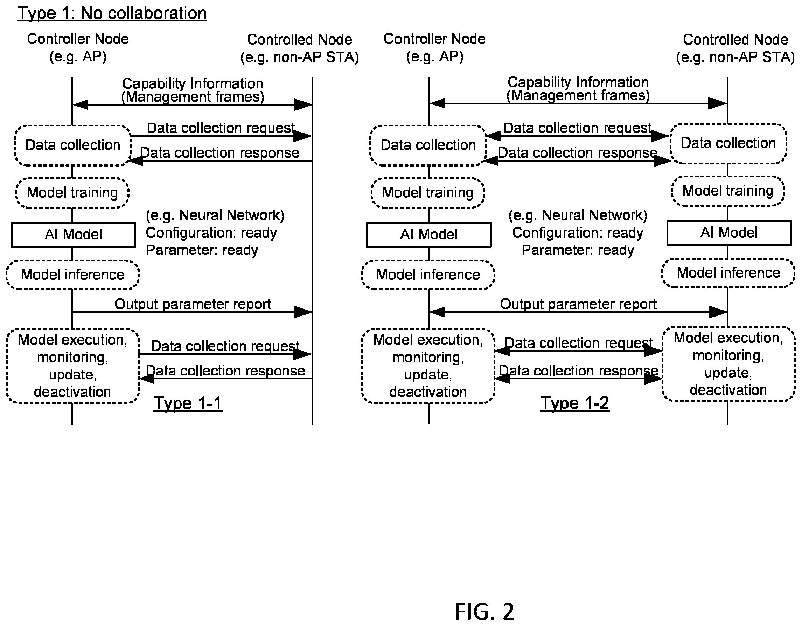

As in the example shown in FIG. 1, the type is classified according to the presence or absence of transfer information between terminals, a transfer source of the AI/ML model, and a location where AI/ML training or inference is performed. Type 1 of FIG. 1 is a type in which no inter-terminal transfer of the AI/ML model and the AI/ML parameters is performed, type 2 is a type in which inter-terminal transfer of the AI/ML parameters is performed, and type 3 is a type in which inter-terminal transfer of the AI/ML model and the AI/ML parameters is performed. Hereinafter, examples of control operations of each type will be described with reference to FIGS. 2 to 4.

FIG. 2 is a diagram showing an exemplary control operation of type 1 in which no inter-terminal transfer of the AI/ML model and the AI/ML parameters is performed. In a case of type 1, it is assumed that the AI/ML model is held in the terminal or is transferred from outside the WLAN network. In type 1, as shown in FIG. 2, type 1-1 in which a location where AI/ML training and inference are performed is only the Controller Node (for example, the AP) and type 1-2 in which a location where AI/ML training and inference are performed is the Controller Node (for example, the AP) and the Controlled Node (for example, the non-AP STA) are assumed.

The Controller Node and the Controlled Node exchange Capability Information via Management frames before a series of AI/ML operations. The Capability information includes the following contents:
· Presence or absence of support for AI/ML operation (for example, whether or not the AI/ML operation can be supported)
· Type of AI/ML model/algorithm to be supported
· Type and range of parameter to be supported.

The above-described Capability information may be included in a Capability Information field. Alternatively, the above-described Capability information may be defined as a Capability element for AI/ML (for example, an AIML Capability element) and may be included in the Management frame.

As shown in FIG. 2, the series of operations related to AI/ML include an operation (or a control operation) of each phase of a Data collection phase, a Model training phase, a Model inference phase, and a phase of "execution of AI model ("Model execution"), monitoring, update, deactivation, and the like". Hereinafter, examples of the operation of each phase will be described.

In the Data collection phase, information necessary for the AI/ML operation is collected between the Controller Node and the Controlled Node. FIG. 2 shows an example in which information is exchanged by a Data collection request and a Data collection response. In type 1-1, the Controller Node collects information necessary for the AI/ML operation. In type 1-2, the Controller Node and the Controlled Node collect information necessary for the AI/ML operation. The information necessary for the AI/ML operation may be, for example, information necessary for training, inference, or the like by the AI/ML model.

After the Data collection phase, in the Model training phase, the model is trained and learns to determine a configuration of the AI model and/or the AI/ML parameters.

The determination of the configuration of the AI model corresponds to, for example, the determination of the type of the AI/ML model and the configuration information corresponding to the type. Examples of the type of the AI/ML model include a neural network (NN), k-means, k-nearest neighbors, a CNN, and an RNN. When the type of the AI/ML model is the NN, examples of the configuration information include the number of NN input nodes, the number of NN intermediate layers, the number of NN intermediate layer nodes, and the number of NN output nodes. When the type of the AI/ML model is the k-means, examples thereof include the number of clusters and the upper limit number of iterations.

The AI/ML parameters are determined according to the configuration of the AI model described above. For example, when the type of the AI/ML model is the NN, examples of the parameter information include a weight matrix, a bias vector, and an activation function (Sigmoid/Tanh/ReLU/ELU/...). When the type of the AI/ML model is the k-means, examples thereof include an initialization method, the number of executions, a relative tolerance error, and a random number seed.

In the Model inference phase, the inference is performed. After the Model training phase and the Model inference phase, the output parameters, which are the training, learning, and inference result, are notified to another terminal. In the present disclosure, the parameters determined according to the configuration of the AI model described above are referred to as AI/ML parameters, and the training, learning, and inference result is referred to as output parameters, but the AI/ML parameters may be included in the configuration information of the AI/ML model, and the training, learning, and inference result may be referred to as the AI/ML parameters.

After the output parameters are notified to another terminal, operations such as AI Model execution, monitoring, update, and deactivation are performed. Here, in order to monitor and update the model, Data collection may be performed by the Data collection request/response.

As shown in FIG. 2, in type 1-1 in which a location where AI/ML training and inference are performed is only the Controller Node, the Controller Node performs a series of operations from the above-described Data collection to the execution, monitoring, update, and deactivation of the AI model. In addition, as shown in FIG. 2, in type 1-2 in which a location where AI/ML training and inference are performed is the Controller Node and the Controlled Node, both the Controller Node and the Controlled Node perform a series of operations from the above-described Data collection to the execution, monitoring, update, and deactivation of the AI model.

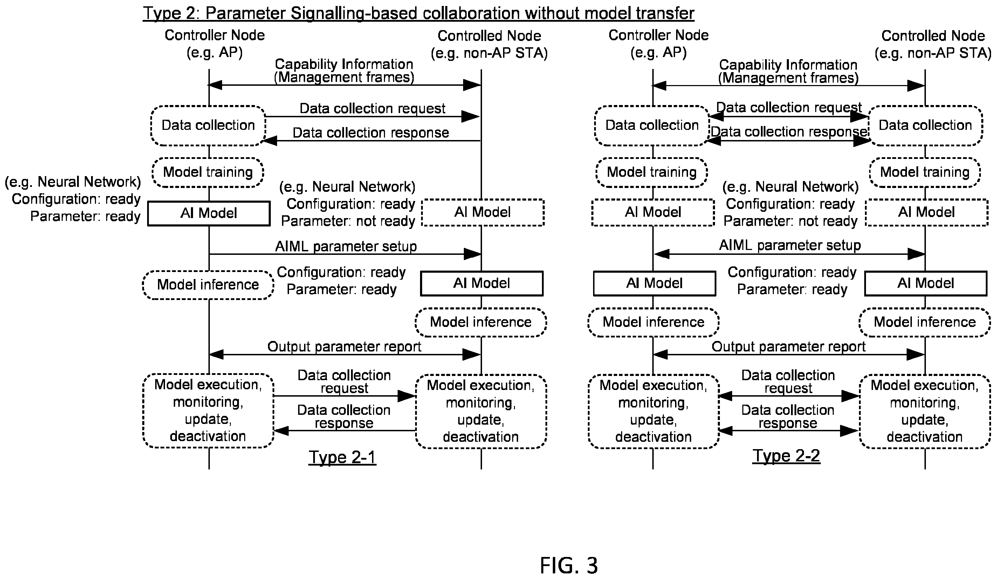

FIG. 3 is a diagram showing an exemplary control operation of type 2 in which inter-terminal transfer of the AI/ML parameters is performed. In the control operation of type 2, after the AI model configuration is established, a step (or phase) of exchanging the AI/ML parameter setup (AIML parameter setup) between terminals is added to the control operation of type 1 shown in FIG. 2. As shown in FIG. 3, in type 2, as in type 1, type 2-1 in which a location where AI/ML training and inference are performed is only the Controller Node and type 2-2 in which a location where AI/ML training and inference are performed is the Controller Node and the Controlled Node are assumed.

In type 2-1, the Data collection for model training and the model training and learning operation are performed only by the Controller Node and are not performed by the Controlled Node. In this case, the AI model is supplied from inside the terminal or from outside the WLAN network, and the AI/ML parameter setup is performed. In type 2-1, information corresponding to the AI/ML parameter setup is notified from the Controller Node to the Controlled Node, and the Controlled Node sets the parameters of the AI/ML model based on the notification. The information corresponding to the AI/ML parameter setup may be the parameter information of the AI/ML parameters described above. Then, the Controller Node and the Controlled Node perform the control operation after the model inference.

In type 2-2, the Controller Node and the Controlled Node perform the Data collection for model training and the model training and learning operation. In type 2-2, information corresponding to the AI/ML parameter setup is notified from the Controller Node to the Controlled Node and is notified from the Controlled Node to the Controller Node. The Controller Node and the Controlled Node set the parameters of the AI/ML model based on the notification. Then, the Controller Node and the Controlled Node perform the control operation after the model inference.

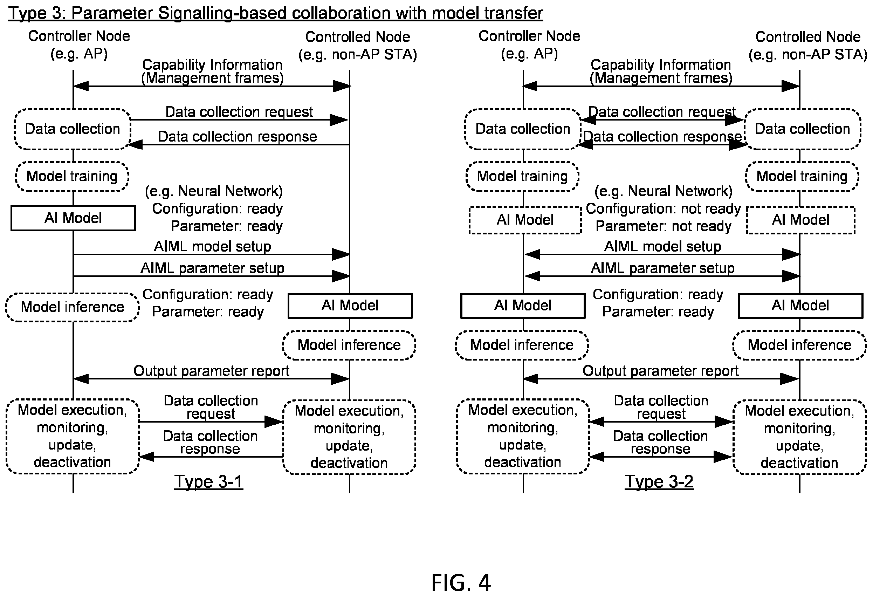

FIG. 4 is a diagram showing an exemplary control operation of type 3 in which there is inter-terminal transfer of the AI/ML model and the parameters. In the control operation of type 3, a step of exchanging the AI/ML model setup (AIML model setup) between terminals together with the AI/ML parameter setup (AIML parameter setup) is added to the control operation of type 2 shown in FIG. 3. As shown in FIG. 4, in type 3, type 3-1 like type 1 in which a location where AI/ML training and inference are performed is only the Controller Node and type 3-2 in which a location where AI/ML training and inference are performed is the Controller Node and the Controlled Node are assumed.

In type 3-1, the Data collection for model training and/or the model training and learning operation are performed only by the Controller Node and are not performed by the Controlled Node. In type 3-1, information corresponding to the AI/ML model setup and information corresponding to the AI/ML parameter setup are notified from the Controller Node to the Controlled Node. The information corresponding to the AI/ML model setup may be the type of the AI/ML model and/or the configuration information corresponding to the model. In the Controlled Node, the configuration and the parameters of the AI model are established in response to the notification of the information corresponding to the AI/ML model setup and the AI/ML parameter setup, and the control operation after the model inference is performed.

In type 3-2, the Controller Node and the Controlled Node perform the Data collection for model training and the model training and learning operation. In type 3-2, information corresponding to the AI/ML model setup and information corresponding to the AI/ML parameter setup are notified from the Controller Node to the Controlled Node and are notified from the Controlled Node to the Controller Node. The Controller Node and the Controlled Node establish the configuration and the parameter of the AI model in response to the notification of the information corresponding to the AI/ML model setup and the AI/ML parameter setup. Then, the Controller Node and the Controlled Node perform the control operation after the model inference.

Note that the type in which the Controller Node and the Controlled Node operate may be defined in advance, or any one of the Controller Node and the Controlled Node may determine the type in which the Controller Node and the Controlled Node operate. For example, any one of the Controller Node and the Controlled Node may determine the type in which the Controller Node and the Controlled Node operate based on the Capability information.

According to Embodiment 1 described above, the information on the AI/ML model and/or the AI/ML parameters can be efficiently shared between terminals in accordance with the transfer type of the AI/ML model and/or the AI/ML parameters. In addition, as a result, the information on the AI/ML model or the AI/ML parameters can be appropriately shared between communication apparatuses.

The type related to the transfer of the AI/ML model to each terminal or the provision of the AI/ML parameters is not limited to the above-described types. For example, in FIG. 1, an example in which there are three types is shown, but a type different from these types may be added.

### (Embodiment 2)

In Embodiment 2, a scheme is adopted in which the correspondence between a use case, a measurement value (or a measurement element) that is an input required for the AI/ML model, and a method of converting the measurement value into an input format of the AI/ML model (or an output parameter format of the AI/ML) is defined as a Data collection request and is defined as an AIML Measurement Type and is shared between terminals.

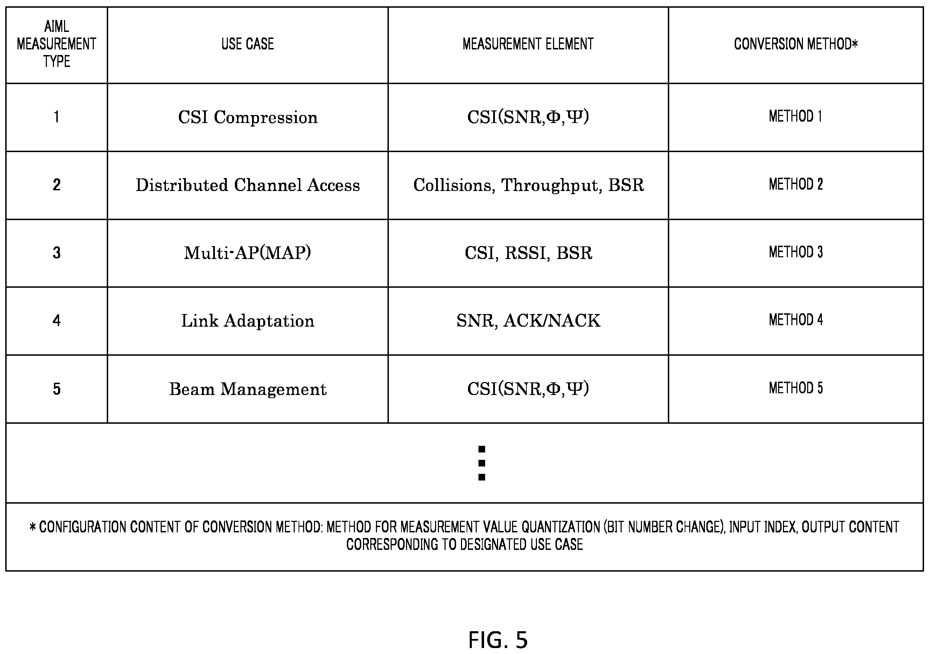

FIG. 5 is a diagram showing an example of the definition of AIML Measurement Types. In FIG. 5, a use case, a type of the measurement element, and a method (conversion method) of converting the measurement element into an input format of the AI/ML model are defined for each AIML Measurement Type.

Examples of the type of the use case include CSI Compression, Distributed Channel Access, Multi-AP (MAP), Link Adaptation, Beam Management, and the like as shown in FIG. 5. However, a use case other than the example shown in FIG. 5 may be defined as the type of the use case.

As the measurement element, as shown in FIG. 5, the measurement value is defined for each use case. The defined measurement value is not limited to one, and may be plural.

The conversion method includes, for example, a quantization method (for example, bit number change) of the measurement value, an index of the input, and output content corresponding to the designated use case. In addition, instead of defining the format of the input data to the AI/ML model (for example, the neural network (NN)), or in addition to defining the format of the input data to the AI/ML model (for example, the neural network (NN)), the format of the output parameters of the AI/ML model (for example, the learning/training result and/or the inference result) (for example, the number of quantization bits, or the numerical representation format such as the floating-point format or the fixedpoint format) may be defined as the conversion method.

The designation of the AIML Measurement Types is not limited to one. A plurality of AIML Measurement Types may be designated.

The Controller Node may include information (for example, a number or an index) indicating the AIML Measurement Type or information (for example, a number or an index) indicating the use case in a frame for the Data collection request and transmit the frame. Alternatively, a frame corresponding to the AIML Measurement Type (or the use case) may be transmitted for the Data collection request. For example, when the use case is "CSI Compression," the Controller Node transmits an NDPA/NDP (Null Data PPDU (Physical layer Protocol Data Unit) Announcement/Null Data PPDU) frame. In addition, for example, when the use case is "Distributed Channel Access", the Controller Node transmits a frame for requesting statistical information (for example, throughput (data rate), frame error rate (for example, CRC error rate) or frame error count (for example, CRC error count), average buffer amount, delay time until transmission, channel busy ratio, and signal quality/intensity) on frame reception and/or frame transmission. In addition, for example, when the use case is "Multi-AP," the Controller Node may transmit a frame for requesting AP (or BSS) statistical information.

Next, the conversion method shown in FIG. 5 will be described using a case where the AI/ML model is a neural network (NN) model as an example.

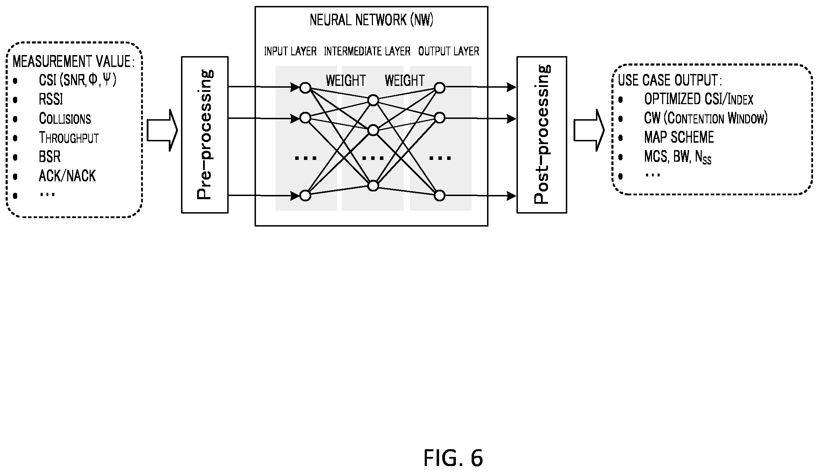

FIG. 6 is a diagram showing an exemplary configuration in which the AI/ML model is a neural network (NN) model.

As shown in FIG. 6, the measurement value corresponding to each use case is input to the neural network. As pre-processing of the input to the neural network, the measurement value is converted into the input format of the neural network. In addition, as post-processing after the output of the neural network, the output of each use case is associated. The conversion method shown in FIG. 5 includes the contents of the pre-processing and the post-processing.

According to Embodiment 2 described above, the correspondence between the use case, the measurement value that is an input required for the AI/ML model, and the conversion method is defined as the Data collection request and is defined as the AIML Measurement Type. The information related to the AI/ML can be appropriately shared between terminals.

In the present disclosure, the method of the Data collection request/response is not particularly limited. Hereinafter, the method of the Data collection request/response will be exemplified in Embodiments 2-1 to 2-5.

### (Embodiment 2-1)

Embodiment 2-1 adopts a scheme in which the Data collection request is additionally defined as one of Measurement types of a Measurement Request element. In Embodiment 2-1, a terminal that performs the Data collection request includes the Measurement Request element defined as the Data collection request in Management frames (Beacon, Association Request/Response, Probe Request/Response, and Action frames) and the like and notifies the Measurement Request element. The operation notified by the terminal is an example of an operation corresponding to the operation of the Data collection request in Embodiment 1 described above.

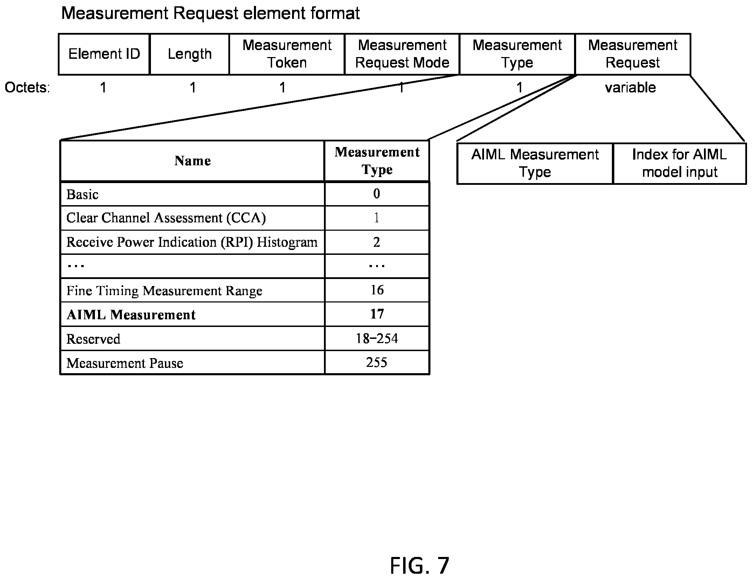

FIG. 7 is a diagram showing an example of a format of a Measurement Request element. FIG. 7 shows a relationship between a value and a content of a Measurement Type field of the format of the Measurement Request element. In Embodiment 2-1, as shown in FIG. 7, a value of 17 that is an undefined value is associated with the AIML Measurement in the Measurement Type field. When the value of the Measurement Type field is 17 that is an undefined value, the Measurement Request field is defined to include the AIML Measurement Type and the Index for AI model input.

In FIG. 7, an example is shown in which the "AIML Measurement" is associated with the value of 17 of the Measurement Type field, but the AIML Measurement may be associated with other undefined values different from 17. In addition, in FIG. 7, the configuration is such that a single one of each of the AIML Measurement Type and the Index for AI model input is provided, but the configuration may be such that they may be provided in plurality.

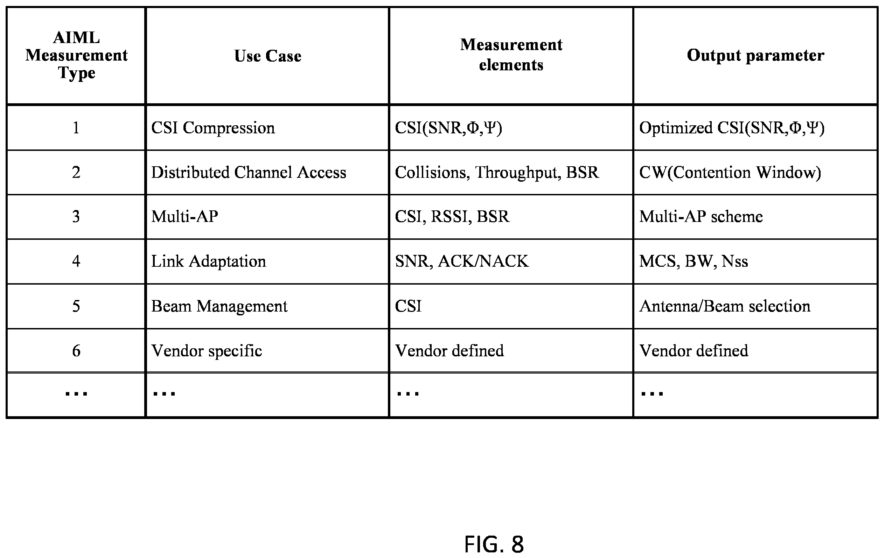

FIG. 8 is a diagram showing an example of a definition of the AIML Measurement Type. FIG. 8 defines a relationship between a value set in the AIML Measurement Type field in FIG. 7 and the content thereof. As shown in FIG. 8, for each AIML Measurement Type, a use case, a type of the measurement element, and an output parameter corresponding to the use case are defined.

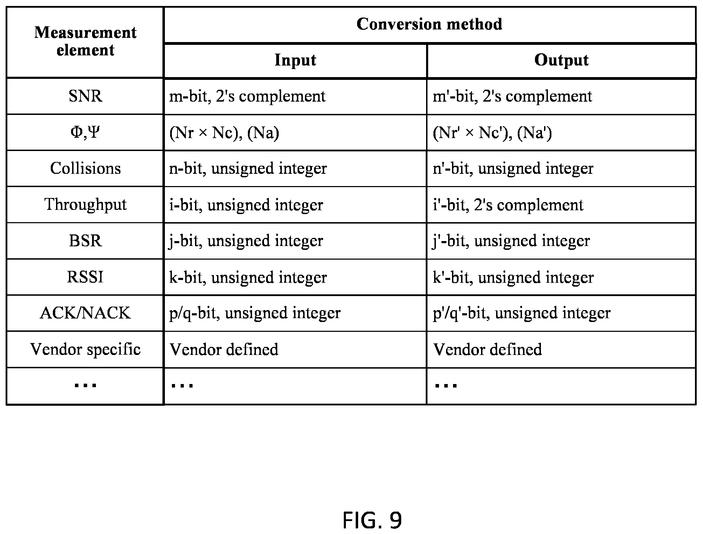

FIG. 9 is a diagram showing an example of a conversion method of a Measurement element. Here, a method of converting each measurement element into the input format of the AI/ML model is defined. For example, the number of input and output bits and each format are defined. The AIML Measurement Type and the Measurement element may be defined as Vendor specific that is dependent on the specification of the vendor.

According to Embodiment 2-1 described above, the Data collection request is additionally defined as one of Measurement types of the Measurement Request element and is included for notification in the Management frames (Beacon, Association Request/Response, Probe Request/Response, and Action frames) and the like, and it is thus possible to share between terminals the measurement type of data (for example, the measurement element) and the conversion method, making it possible to appropriately share information related to the AI/ML between the terminals.

### (Embodiment 2-2)

Embodiment 2-2 adopts a scheme in which elements of the Data collection request are newly defined. In the present embodiment, the elements of the Data collection request newly defined are referred to as a Data collection element, but the present disclosure is not limited to this name. In Embodiment 2-2, a terminal that performs the Data collection request includes the Data collection element in Management frames (Beacon, Association Request/Response, Probe Request/Response, and Action frames) and the like and notifies the Data collection element. The operation notified by the terminal is an example of an operation corresponding to the operation of the Data collection request in Embodiment 1 described above.

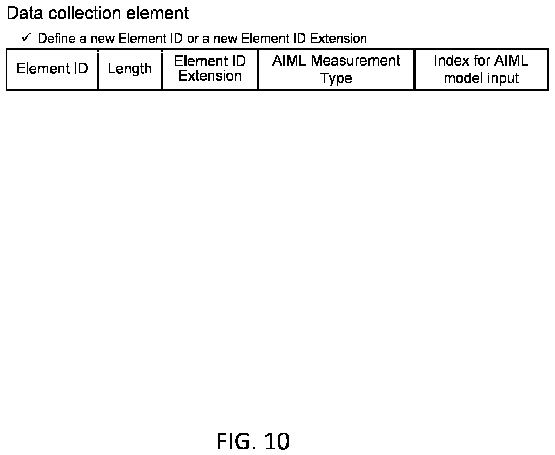

FIG. 10 is a diagram showing an example of a format of the Data collection element. Here, by defining an Element ID or an Element ID Extension to specific values that are undefined values, a certain element may be recognized as the Data collection element. In this case, as shown in FIG. 10, the Data collection element may have a configuration including the AIML Measurement Type and the Index for AIML model input. The contents of these fields may be the same as in Embodiment 2-1.

The same content including the AIML Measurement Type and the Index for AIML model input may be defined as a new frame. For example, a new frame including the AIML Measurement Type and the Index for AIML model input may be defined by setting a Subtype value or a Control Frame Extension value in a Frame Control field in the frame to specific values (undefined values).

According to Embodiment 2-2 described above, the elements (Data collection element) of the Data collection request are newly defined, and are included in the Management frames (Beacon, Association Request/Response, Probe Request/Response, and Action frames) and the like and are notified, and it is thus possible to share between terminals the measurement type of data (for example, the measurement element) and the conversion method, making it possible to appropriately share information related to the AI/ML between terminals.

### (Embodiment 2-3)

Embodiment 2-3 adopts a scheme in which the Data collection request is additionally defined in a Null Data Packet (NDP) Announcement frame. In Embodiment 2-3, a terminal that performs the Data collection request notifies the NDP Announcement frame defined as the Data collection request. The operation notified by the terminal is an example of an operation corresponding to the operation of the Data collection request in Embodiment 1 described above.

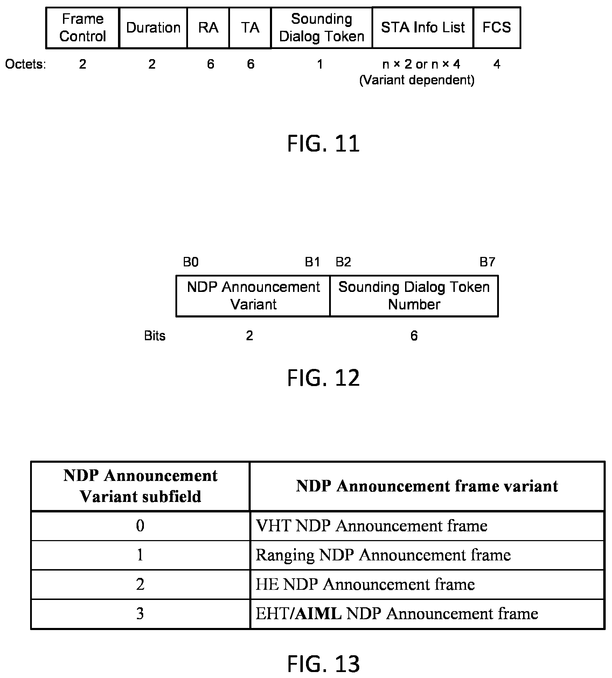

FIG. 11 is a diagram showing an example of a format of the NDP Announcement frame. FIG. 12 is a diagram showing an example of a format of a Sounding Dialog Token field in the NDP Announcement frame. An NDP Announcement variant is included in the Sounding Dialog Token field.

FIG. 13 is a diagram showing an example of a definition of the NDP Announcement frame variant. In FIG. 13, the definition of the NDP Announcement Variant subfield in a case of "3" is an EHT NDP Announcement frame in the related art. In the present embodiment, when the NDP Announcement Variant subfield is "3", it is defined as an EHT/AIML NDP Announcement frame in consideration of the AIML compatibility.

Here, it is assumed that the NDP Announcement Variant subfield is "3" in consideration of the AIML compatibility, but the present disclosure is not limited to this. For example, when the NDP Announcement Variant subfield is a value other than "3", it may be used also for the AIML.

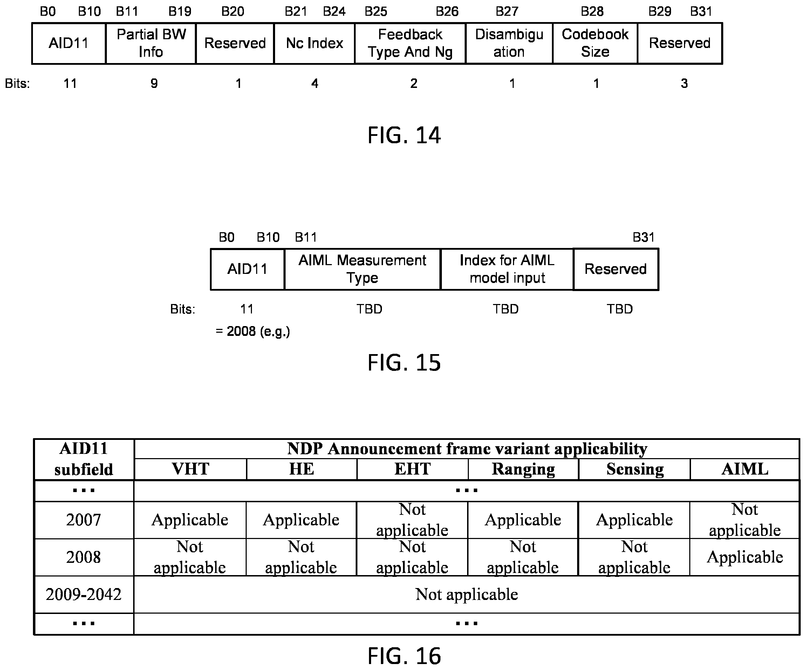

The NDP Announcement frame shown in FIG. 11 includes a STA Info List. For example, a plurality of STA Info fields as shown in FIG. 14 and/or FIG. 15 are present in the STA Info List.

FIG. 14 is a diagram showing an example of a format of a STA Info field in a case of an EHT NDP Announcement frame. FIG. 15 is a diagram showing an example of a format of a STA Info field in a case of an AIML NDP Announcement frame.

As shown in FIG. 15, the STA Info field in a case of the AIML NDP Announcement frame may have a configuration including the AIML Measurement Type and the Index for AIML model input. The contents of the fields of the AIML Measurement Type and the Index for AIML model input in FIG. 15 may be the same as in Embodiment 2-1 described above.

Note that whether or not the STA Info field is the AIML NDP Announcement frame may be determined by whether or not the value of the AID11 subfield is a specific value (for example, 2008).

FIG. 16 is a diagram showing an example of a definition of an AID11 subfield in the NDP Announcement frame. As shown in FIG. 16, a value of "2008" to "2042" that is not defined for any of the types of the NDP Announcement frame defined in the related art, VHT/HE/EHT/Ranging/Sensing is defined to indicate that the STA Info field is the AIML NDP Announcement frame, and therefore, a terminal (for example, a node) that receives the frame can recognize that the received frame is the AIML NDP Announcement frame.

According to Embodiment 2-3 described above, by additionally defining the Data collection request in the NDP Announcement frame, it is possible to share between terminals the measurement type of data (for example, the measurement element) and the conversion method, making it possible to appropriately share information related to the AI/ML between terminals.

### (Embodiment 2-4)

Embodiment 2-4 adopts a scheme in which Data collection frames corresponding to the application/use case-specific measurement elements are defined. In Embodiment 2-4, a terminal that performs the Data collection request notifies the Data collection frames defined to correspond to the application/use case-specific measurement element. The operation notified by the terminal is an example of an operation corresponding to the operation of the Data collection request in Embodiment 1 described above.

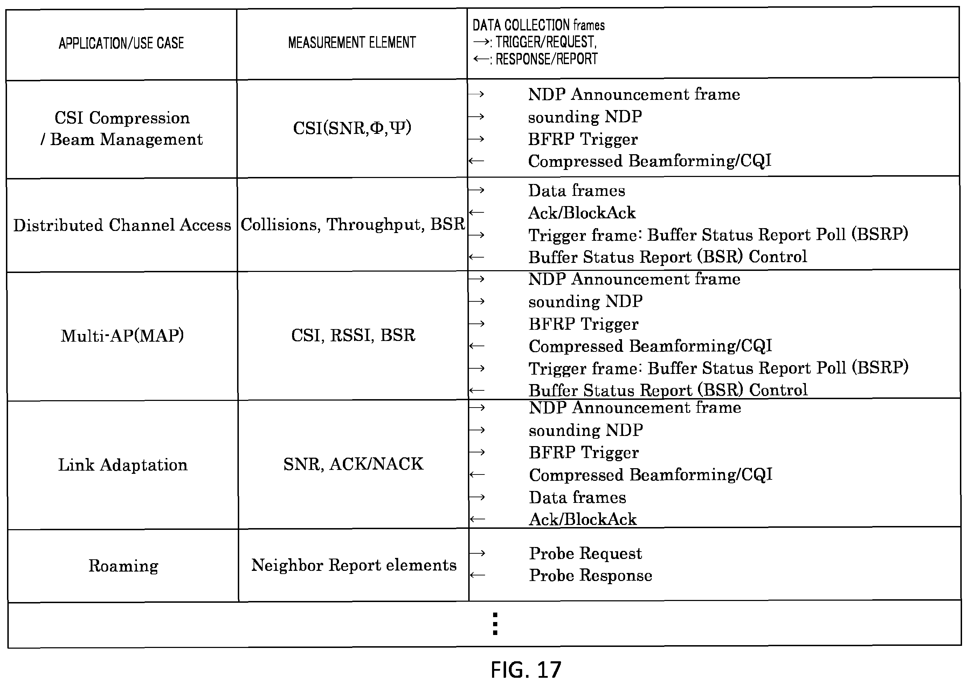

FIG. 17 is a diagram showing an example of a definition of a Data collection frame for each application/use case. FIG. 17 shows the measurement element required in the application/use case and the frame required to collect the measurement element. For example, in a case of Channel State Information (CSI) Compression, the measurement element is CSI (Signal to Noise Ratio (SNR), Φ, Ψ (Φ and Ψ are quantized angles)), a trigger or a request required to acquire the CSI is an NDP Announcement frame, a sounding NDP, or a Beamforming Report Poll (BFRP) Trigger frame, and the report is Compressed Beamforming/CQI.

A frame indicated by a rightward arrow (that is, "→") in the column of the Data collection frames of FIG. 17 may be transmitted by a terminal (for example, a Controller Node) that performs the Data collection request and received by a terminal (for example, a Controlled Node) that performs the Data collection response. In addition, a frame indicated by a leftward arrow (that is, "←") may be transmitted by the terminal (for example, the Controlled Node) that performs the Data collection response and received by the terminal (for example, the Controller Node) that performs the Data collection request. The Controller Node and the Controlled Node may transmit and receive the frames in the order shown in FIG. 17, but the present disclosure is not limited to this.

When the application/use case is CSI Compression or Beam Management by way of example, in this case, at least one of the NDP Announcement frame, the sounding NDP, or the BFRP Trigger is transmitted by the terminal (for example, the Controller Node) that performs the Data collection request and is received by the terminal (for example, the Controlled Node) that performs the Data collection response, as a trigger or a request for the Data collection. Then, the Compressed Beamforming or the CQI is transmitted by the terminal (for example, the Controlled Node) that performs the Data collection response and is received by the terminal (for example, the Controller Node) that performs the Data collection request, as a response or a report of the Data collection. The NDP Announcement frame, the sounding NDP, and the BFRP Trigger, and, the Compressed Beamforming or the CQI may be transmitted and received in the order shown in FIG. 17, or may be transmitted and received in an order different from the order shown in FIG. 17.

According to Embodiment 2-4 described above, the Data collection frames corresponding to the application/use case-specific measurement element are defined, and it is thus possible to share information related to the AI/ML between terminals.

### (Embodiment 2-5)

Embodiment 2-5 adopts a scheme in which Data collection is performed in an application layer. In Embodiment 2-5, a terminal that performs the Data collection request requests Data collection in the application layer. The operation of the terminal is an example of an operation corresponding to the operation of the Data collection request in Embodiment 1 described above.

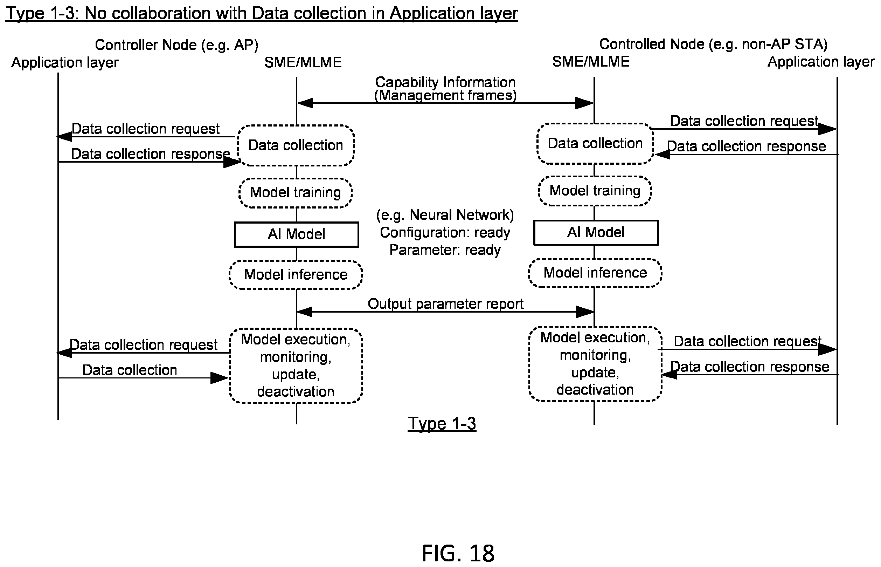

FIG. 18 is a diagram showing an exemplary control operation in a case where Data collection is performed in the application layer. In FIG. 18, for example, Data collection in the control operation of type 1-2 shown in FIG. 2 is performed in the application layer.

In FIG. 18, in a phase in which an operation such as Data collection, AI Model execution, monitoring, update, and deactivation is performed, information necessary for the AI/ML operation is exchanged between a Station Management Entity (SME) (terminal management function)/MAC Sublayer Management Entity (MLME) (MAC layer management function) and the Application layer by Data collection request/response. Note that the present disclosure may be used for general applications other than for the WLAN.

According to Embodiment 2-5 described above, Data collection is performed in the application layer, and it is thus possible to share information related to the AI/ML between the application and the terminal.

In Embodiment 2-5, an example is shown in which the Data collection in the control operation of type 1-2 shown in FIG. 2 is performed in the application layer, but the present disclosure is not limited to this. For example, the Data collection in the control operation of each type (for example, each type shown in FIGS. 2 to 4) shown in Embodiment 1 may be performed in the application layer.

In Embodiments 2-1 to 2-5 described above, the terminal that performs the Data collection request may be a Controller Node or a Controlled Node. For example, in a case of type 1-1, 2-1, and 3-1 shown in Embodiment 1, the terminal that performs the Data collection request may be a Controller Node. For example, in a case of type 1-2, 2-2, and 3-2 shown in Embodiment 1, the terminal that performs the Data collection request may be a Controller Node and a Controlled Node.

### (Embodiment 3)

In Embodiments 2-1 to 2-5 described above, the method of the Data collection request/response in which information corresponding to the Data collection request/response is exchanged between terminals has been described. In Embodiment 3, the method of the Data collection request/response in which information corresponding to the Data collection request/response, information corresponding to the AIML model setup, and information corresponding to the AIML parameter setup are exchanged between terminals will be described.

In Embodiment 3, for example, a scheme is adopted in which, when a Category of an Action frame is a specific value, a frame including the Data collection request/response, the AIML model setup, and the AIML parameter setup is defined. For example, as the specific values, 39, 40, and the like that are currently undefined values are used.

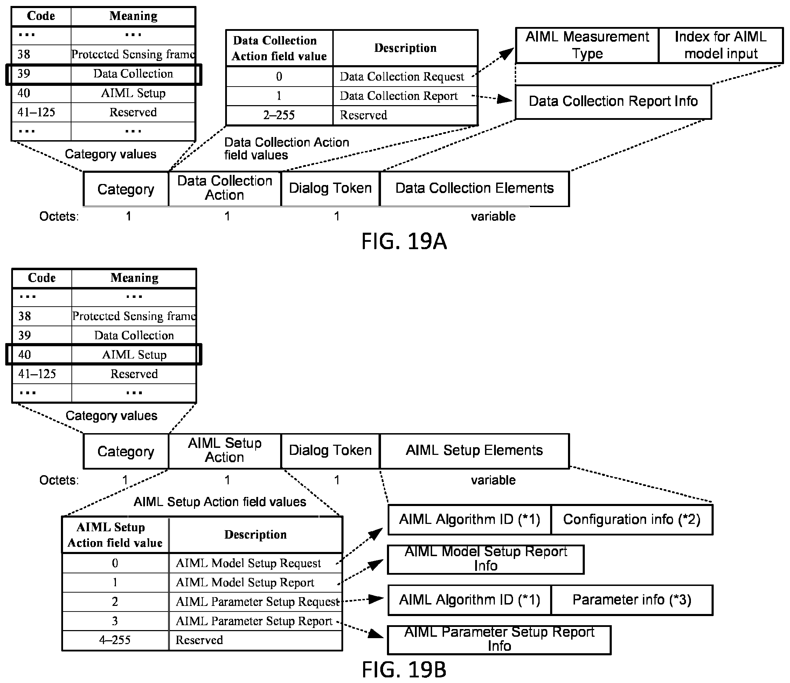

FIGS. 19A and 19B are diagrams showing an example of a format of the Action frame. A type of the Action frame is defined in the Category of FIGS. 19A and 19B. Here, the type of the Data collection request/response, the AIML model setup, and the AIML parameter setup are defined in 39, 40, and the like that are currently undefined values. In the examples of FIGS. 19A and 19B, the Data collection request/response (Data Collection) is defined in 39, and the AIML model setup and the AIML parameter setup (AIML Setup) are defined in 40. Note that the AIML model setup and the AIML parameter setup are defined in the same 40, but the AIML model setup and the AIML parameter setup may be defined in different values from each other.

FIG. 19A shows a case where the Category is set to the Data collection request/response (Data Collection). The case where the Category is set to the Data collection request/response (Data Collection) corresponds to, for example, a case where the Category includes a value of 39. In the example of FIG. 19A, a Data Collection Action field is included after the Category.

The Data Collection Action field indicates, for example, whether or not the Action frame is a Data Collection Request or a Data Collection response (Data Collection Report). FIG. 19A shows an example in which the Data Collection Request is defined as 0 and the Data Collection Report is defined as 1. Note that defining the Data Collection Request as 0 may correspond to associating the Data Collection Request with 0. The content of the Data Collection Elements after the Data Collection Action field changes depending on the value of the Data Collection Action field.

When the value of the Data Collection Action field indicates the Data Collection Request (for example, when the value of the Data Collection Action field is 0), for example, the AIML Measurement Type and the Index for AIML model input are included after the Data Collection Action field. The contents of the fields of the AIML Measurement Type and the Index for AIML model input may be the same as in Embodiment 2-1.

When the value of the Data Collection Action field indicates the Data Collection response (Data Collection Report) (for example, when the value of the Data Collection Action field is 1), a result (Data Collection Report Info) for the Data Collection Request is included after the Data Collection Action field.

FIG. 19B shows a case where the Category is set to the AIML model setup and the AIML parameter setup (AIML Setup). The case where the Category is set to the AIML model setup and the AIML parameter setup (AIML Setup) corresponds to, for example, a case where the Category includes a value of 40. In the example of FIG. 19B, an AIML Setup Action field is included after the Category field.

The AIML Setup Action field indicates, for example, any of an AIML Model Setup Request, an AIML Model Setup response (AIML Model Setup Report), an AIML Parameter Setup Request, or an AIML Parameter Setup response (AIML Parameter Setup Report). In FIG. 19B, the AIML Model Setup Request is defined as 0, the AIML Model Setup Response is defined as 1, the AIML Parameter Setup Request is defined as 2, and the AIML Parameter Setup response is defined as 3. The content of the AIML Setup Elements after the AIML Setup Action field changes depending on the value of the AIML Setup Action field.

When the AIML Setup Action field indicates the AIML Model Setup Request (for example, when the value of the AIML Setup Action field is 0), for example, an AI/ML Algorithm ID (AIML Algorithm ID) and Configuration info are included after the AIML Setup Action field.

When the AIML Setup Action field indicates the AIML Model Setup Response (AIML Model Setup Report) (for example, when the value of the AIML Setup Action field is 1), an AIML model setup result is included after the AIML Setup Action field.

When the AIML Setup Action field indicates the AIML Parameter Setup Request (for example, when the value of the AIML Setup Action field is 2), for example, an AI/ML Algorithm ID (AIML Algorithm ID) or Parameter info is included after the AIML Setup Action field.

When the AIML Setup Action field indicates the AIML Parameter Setup response (AIML Parameter Setup Report) (for example, when the value of the AIML Setup Action field is 3), an AIML parameter setup result is included after the AIML Setup Action field.

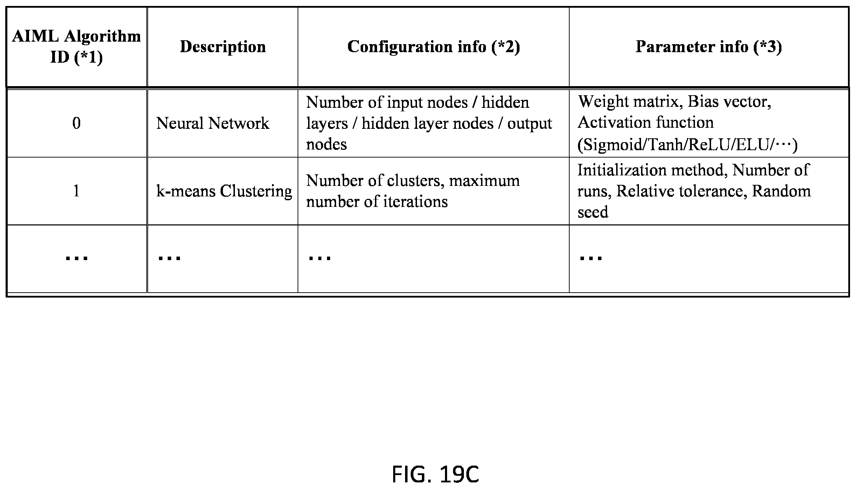

FIG. 19C is a diagram showing an example of a definition of the AI/ML Algorithm ID (AIML Algorithm ID). As shown in FIG. 19C, for the AI/ML Algorithm ID (AIML Algorithm ID), the correspondence to the type of the AI/ML model is defined, and the correspondence to the configuration information (Configuration info in FIG. 19B) and/or parameter information (Parameter info) in FIG. 19B) is defined for each ID. Examples of the type of the AI/ML model include a neural network (NN), k-means, k-nearest neighbors, a convolutional neural network (CNN), and a recurrent neural network (RNN). When the type of the AI/ML model is the NN, examples of the Configuration info include the number of NN input nodes, the number of NN intermediate layers, the number of NN intermediate layer nodes, and the number of NN output nodes. When the type of the AI/ML model is the k-means, examples thereof include the number of clusters and the upper limit number of iterations. When the type of the AI/ML model is the NN, examples of the parameter information include a weight matrix, a bias vector, and an activation function (Sigmoid/Tanh/ReLU/ELU/...). When the type of the AI/ML model is the k-means, examples thereof include an initialization method, the number of executions, a relative tolerance error, and a random number seed.

In the above definition, a specific AI/ML algorithm is defined, but the AI/ML algorithm may be defined as vendor specific that is dependent on the specification of the vendor.

According to Embodiment 3 described above, when the Category of the Action frame is a specific value, a frame including at least one of the Data collection request/response, the AIML model setup, or the AIML parameter setup is defined, and it is thus possible to share information related to the AI/ML between terminals.

In Embodiment 3 described above, an example is shown in which the Action frame is defined as a frame including at least one of the Data collection request/response, the AIML model setup, or the AIML parameter setup, but the present disclosure is not limited to this. For example, any of Embodiments 2-1 to 2-5 described above may be applied to the Data collection request/response, and the Action frame may be used for the AIML model setup and the AIML parameter setup as in Embodiment 3 described above.

### (Embodiment 4)

Embodiment 4 adopts a scheme in which information elements (AIML model element, AIML parameter element, and AIML model parameter element) including the contents of the AIML model setup and the AIML parameter setup are included in a Management frame (Beacon, Association Request/Response, Probe Request/Response, Action frames, and the like) and are notified.

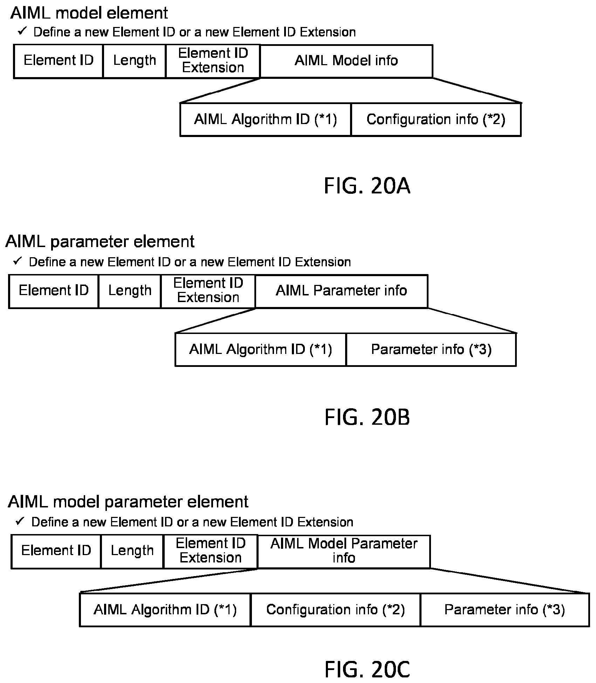

FIG. 20A is a diagram showing an example of a format of the AIML model element. FIG. 20B is a diagram showing an example of a format of the AIML parameter element. FIG. 20C is a diagram showing an example of a format of the AIML model parameter element. Note that by defining an Element ID or an Element ID Extension of the element to a specific value that is currently an undefined value, a certain element may be recognized as any of the AIML model element, the AIML parameter element, or the AIML model parameter element.

As shown in FIG. 20A, in a case of the AIML model element, AIML Model info is included. The content of the AIML Model info includes, for example, an AIML Algorithm ID and Configuration info. The AIML Algorithm ID and the Configuration info may have the same contents as in Embodiment 3.

As shown in FIG. 20B, in a case of the AIML parameter element, AIML Parameter info is included. The content of the AIML Parameter info includes, for example, an AIML Algorithm ID and Parameter info. The AIML Algorithm ID and the Parameter info may have the same contents as in Embodiment 3.

As shown in FIG. 20C, in a case of the AIML model parameter element, AIML Model Parameter info is included. The content of the AIML Model Parameter info includes, for example, an AIML Algorithm ID, Configuration info, and Parameter info. The AIML Algorithm ID, the Configuration info, and the Parameter info may have the same contents as in Embodiment 3. In the example of FIG. 20C, the Configuration info and the Parameter info are configured to be included, but the presence or absence of each of the Configuration info and the Parameter info may be designated.

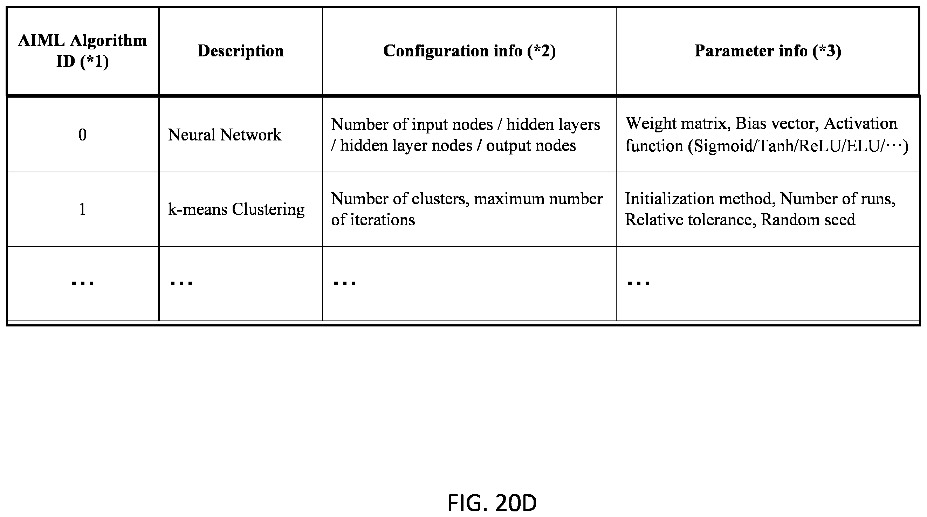

FIG. 20D is a diagram showing an example of a definition of an AI/ML Algorithm ID (AIML Algorithm ID). As shown in FIG. 20D, for the AI/ML Algorithm ID (AIML Algorithm ID), the correspondence to the type of the AI/ML model is defined, and the correspondence to the Configuration info and/or the Parameter info is defined for each ID. Since FIG. 20D is the same as FIG. 19C, the description thereof will be omitted.

According to Embodiment 4 described above, the information elements including the contents of the AIML model setup and the AIML parameter setup are included in the Management frames and are notified, and it is thus possible to share information related to the AI/ML between terminals.

### (Embodiment 5)

Embodiment 5 adopts a scheme in which frames (AIML model setup frame, AIML parameter setup frame, and AIML model parameter setup frame) including the AIML model setup and the AIML parameter setup are newly defined.

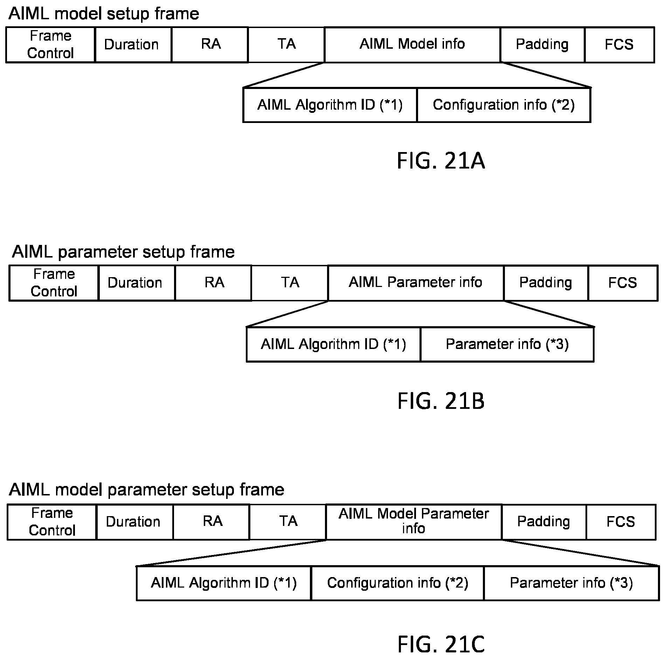

FIG. 21A is a diagram showing an example of a format of the AIML model setup frame. FIG. 21B is a diagram showing an example of a format of the AIML parameter setup frame. FIG. 21C is a diagram showing an example of a format of the AIML model parameter setup frame. Note that by setting a subtype value or a Control Frame Extension value of a Frame Control field to a specific value (for example, an undefined value), a certain frame may be recognized as any of the AIML model setup frame, the AIML parameter setup frame, and the AIML model parameter setup frame.

As shown in FIG. 21A, in a case of the AIML model setup frame, AIML Model info is included. The content of the AIML Model info includes, for example, an AIML Algorithm ID and Configuration info. The AIML Algorithm ID and the Configuration info may have the same contents as in Embodiment 3.

As shown in FIG. 21B, in a case of the AIML parameter setup frame, AIML Parameter info is included. The content of the AIML Parameter info includes, for example, an AIML Algorithm ID and Parameter info. The AIML Algorithm ID and the Parameter info may have the same contents as in Embodiment 3.

As shown in FIG. 21C, in a case of the AIML model parameter setup frame, AIML Model Parameter info is included. The content of the AIML Model Parameter info includes, for example, an AIML Algorithm ID, Configuration info, and Parameter info. The AIML Algorithm ID, the Configuration info, and the Parameter info may have the same contents as in Embodiment 3. In the example of FIG. 21C, the Configuration info and the Parameter info are configured to be included, but the presence or absence of each of the Configuration info and the Parameter info may be designated.

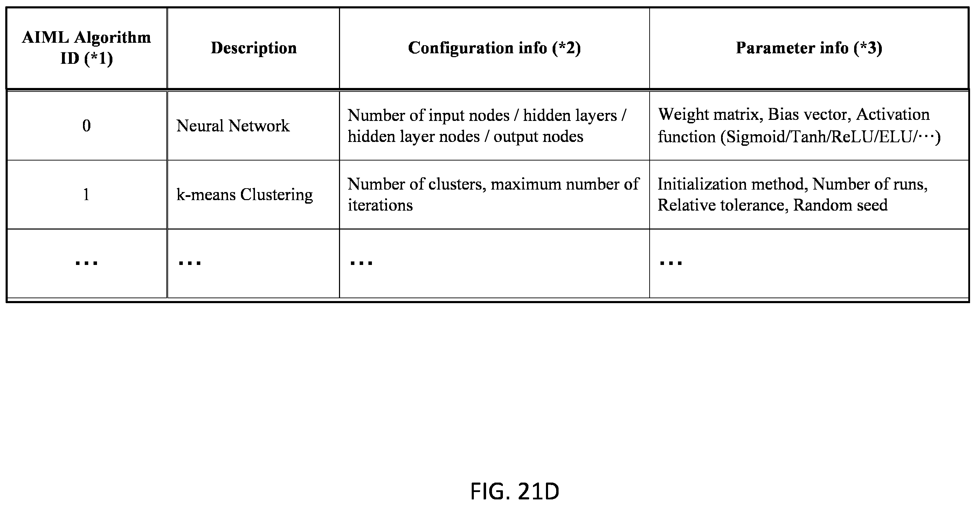

FIG. 21D is a diagram showing an example of a definition of an AI/ML Algorithm ID (AIML Algorithm ID). As shown in FIG. 21D, for the AI/ML Algorithm ID (AIML Algorithm ID), the correspondence to the type of the AI/ML model is defined, and the correspondence to the Configuration info and/or the Parameter info is defined for each ID. Since FIG. 21D is the same as FIG. 19C, the description thereof will be omitted.

According to Embodiment 5 described above, the frame including the AIML model setup and the AIML parameter setup is newly defined, and it is thus possible to share information related to the AI/ML between terminals.

### (Embodiment 6)

Embodiment 6 adopts a scheme in which the output parameters are notified (Output parameter report) as a training or inference result by the AI/ML.

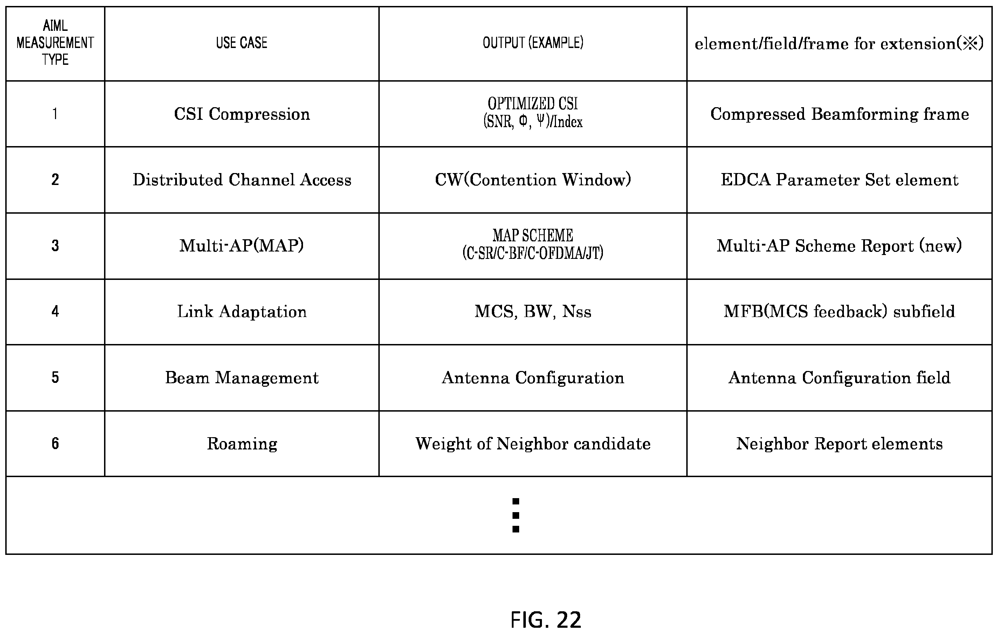

FIG. 22 is a diagram showing an example of Output parameter report for each AIML Measurement Type. For each AIML Measurement Type, a use case, an output example, and an element/field/frame that is a base of the output report are shown. For each AIML Measurement Type/use case, the output that is the training or inference result by the AI/ML is added to or replaced with the element/field/frame that is the base of the output report to configure the output. A part of the element/field/frame that is already defined may be used, or a new element/field/frame may be added. In addition, the output may be included in the AI/ML parameter setup (AIML parameter setup) and reported. The output parameters may be designated by notifying the AIML Measurement Type that is the number of the use case, or the output parameters designated by the AIML Measurement Type, the index, and the like may be notified.

According to Embodiment 6 described above, the output parameters are notified (Output parameter report) as the training or inference result by the AI/ML, and it is thus possible to share information related to the AI/ML between terminals.

### (Embodiment 7)

Embodiment 7 adopts a scheme in which, after the Output parameter report of the training or inference result by the AI/ML, the terminal that receives the notification of the parameters operates with the updated parameters.

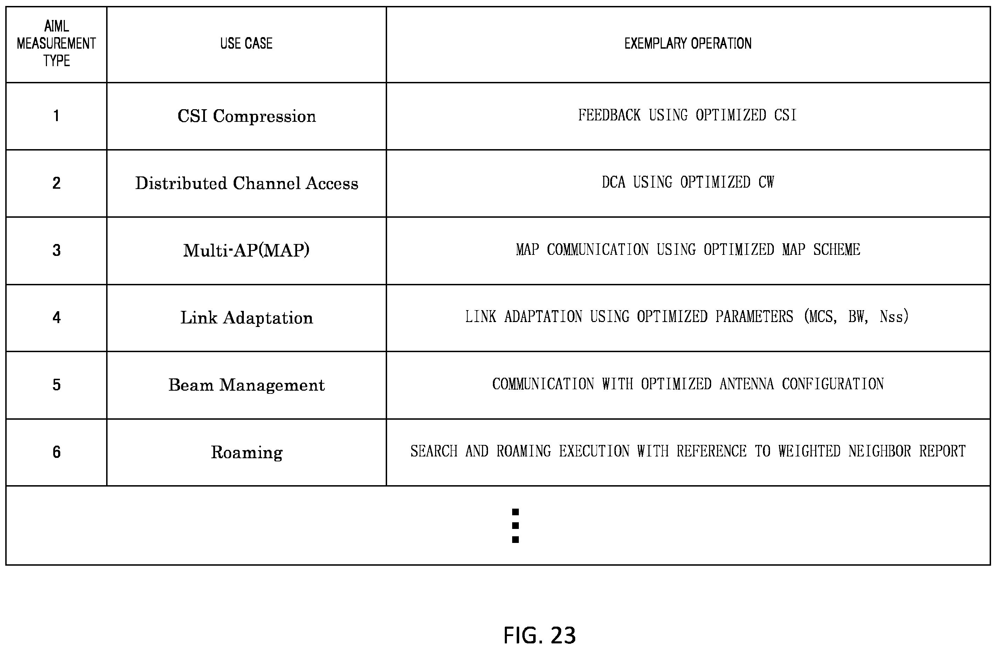

FIG. 23 is a diagram showing an exemplary operation after Output parameter report for each AIML Measurement Type. In FIG. 23, a use case and an exemplary operation thereof are shown for each AIML Measurement Type. For each AIML Measurement Type/use case, the Output parameter report is received, and the operation shown in the example of FIG. 23 is performed with the updated parameters.

According to Embodiment 7 described above, after the Output parameter report of the training or inference result by the AI/ML, the terminal that receives the notification of the parameters operates with the updated parameters, and therefore, the operation optimized by the AI/ML can be performed.

Note that, as in type 1-1 of FIG. 2 shown in Embodiment 1 described above, a terminal (for example, the Controller Node of type 1-1 of FIG. 2) that performs the training or inference by the AI/ML but does not receive the notification of the output parameters from another terminal may update the parameters with the training or inference result by the AI/ML of the terminal itself and perform the operation. In addition, the terminal that receives the notification of the output parameters from another terminal may perform the updated operation based on the notified output parameters and the training or inference result by the AI/ML of the terminal itself.

The embodiments described above may be used in combination as appropriate, or may be used by being switched to each other.

In addition, in each of the embodiments described above, the sharing of the information related to the AI/ML between the two terminals (the Controlled Node and the Controller Node) has been described as an example, but the present disclosure is not limited to this. The information related to the AI/ML may be shared among three or more terminals. In this case, at least one Controller Node may be included in the three or more terminals.

### <Example of Apparatus Configuration>

An example of a configuration of the Controller Node (for example, the AP) and the Controlled Node (for example, the non-AP STA) according to each of the above-described embodiments will be described.

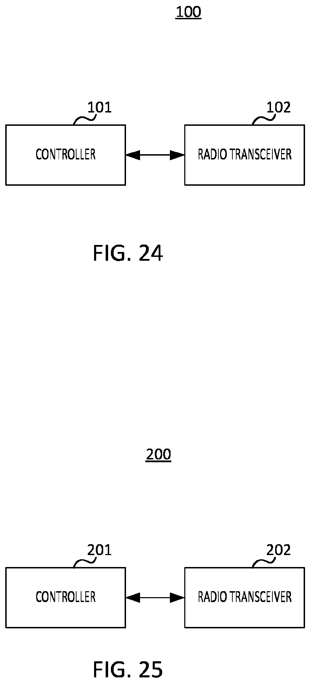

FIG. 24 is a diagram showing an example of a configuration of Controller Node 100. Controller node 100 may be referred to as communication apparatus 100. In communication apparatus 100 shown in FIG. 24, controller 101 (for example, corresponding to control circuitry) performs at least one setup of the setup of the Artificial Intelligence (Al)/Machine Learning (ML) model (for example, the above-described AIML model setup), the setup of the parameters of the AI/ML model (for example, the above-described AIML parameter setup), and the setup of the data used in the AI/ML model (for example, the above-described setup of the Data collection) in accordance with the type related to the sharing of the information related to the AI/ML model between the communication apparatuses (for example, the type shown in FIG. 1). Radio transceiver 102 (for example, corresponding to transmission circuitry) transmits the information corresponding to the at least one setup to another communication apparatus (for example, Controlled Node 200).

Controller 101 sets, for example, the measurement type, the measurement element, the parameter of the output, the conversion method, and the like based on the correspondence relation as shown in FIGS. 5, 8, and 9 as the setup of the data used in the AI/ML model in accordance with type 1 of FIG. 1. Radio transceiver 102 transmits the information (for example, the above-described AIML Measurement Type and the Index for AIML model input) corresponding to the setup to Controlled Node 200.

Controller 101 performs, for example, the setup of the data used in the AI/ML model and the setup of the parameters of the AI/ML model in accordance with type 2 of FIG. 1. Controller 101 sets the parameter information as shown in FIG. 19C as the setup of the parameters of the AI/ML model. Radio transceiver 102 transmits the information (for example, the above-described AIML Measurement Type and the Index for AIML model input) corresponding to the setup of the data used in the AI/ML model and the information (for example, the above-described Parameter info) corresponding to the setup of the parameters of the AI/ML model to Controlled Node 200.

Controller 101 performs, for example, the setup of the data used in the AI/ML model, the setup of the parameters of the AI/ML model, and the setup of the AI/ML model in accordance with type 3 of FIG. 1. Controller 101 sets the AIML Algorithm and the configuration information as shown in FIG. 19C as the setup of the AI/ML model. Radio transceiver 102 transmits the information (for example, the above-described AIML Measurement Type and the Index for AIML model input) corresponding to the setup of the data used in the AI/ML model, the information (for example, the above-described Parameter info) corresponding to the setup of the parameters of the AI/ML model, and the information (for example, the above-described AIML Algorithm ID and the Configuration info) corresponding to the setup of the AI/ML model to Controlled Node 200.

FIG. 25 is a diagram showing an example of a configuration of Controlled Node 200. Controlled node 200 may be referred to as communication apparatus 200. In communication apparatus 200 shown in FIG. 25, controller 201 (for example, corresponding to control circuitry) performs at least one setup of the setup of the Artificial Intelligence (Al)/Machine Learning (ML) model, the setup of the parameters of the AI/ML model, and the setup of the data used in the AI/ML model in accordance with the type related to the sharing of the information related to the AI/ML model between the communication apparatuses. Radio transceiver 202 (for example, corresponding to reception circuitry) receives the information corresponding to the at least one setup from another communication apparatus.

Although the embodiments have been described above with reference to the drawings, the present disclosure is not limited to these examples. Obviously, a person skilled in the art would arrive at variations and modifications within a scope described in claims. It is understood that these variations and modifications are within the technical scope of the present disclosure. In addition, the components in the embodiments may be optionally combined without departure from the spirit of the present disclosure.

In the description of the embodiment described above, the term, such as "part" or "portion" or the term ending with a suffix, such as "-er" "-or" or "-ar" may be replaced with another term, such as "circuit (circuitry)," "device," "unit," or "module."

The interface name (frame name), the field, or the subfield name described in each embodiment may be other names.

In addition, in each embodiment described above, the field (or the subfield) used for the notification of the control information is an example, and other fields or subfields may be used. In addition, the number of bits used for the notification of the control information in each field or subfield is an example, and other numbers of bits may be used.

The format of the signal described in each embodiment described above is merely an example, and may be another configuration in which at least one of the addition of another field or the deletion of one or some fields is performed, or may be another configuration in which at least one of the addition of another subfield or the deletion of one or some subfields is performed in each of the fields described above.

In addition, in the embodiments described above, a case based on a format defined in IEEE 802.11 has been described as an example, but the format to which an exemplary embodiment of the present disclosure is applied is not limited to the format of IEEE 802.11.

The present disclosure can be realized by software, hardware, or software in cooperation with hardware. Each functional block used in the description of each embodiment described above can be partly or entirely realized by an LSI such as an integrated circuit, and each process described in each embodiment may be controlled partly or entirely by the same LSI or a combination of LSIs. The LSI may be individually formed as chips, or one chip may be formed so as to include a part or all of the functional blocks. The LSI may include a data input and output coupled thereto. The LSI herein may be referred to as an IC, a system LSI, a super LSI, or an ultra LSI depending on a difference in the degree of integration.

However, the technique of implementing an integrated circuit is not limited to the LSI and may be realized by using a dedicated circuit, a general-purpose processor, or a special-purpose processor. In addition, a FPGA(Field Programmable Gate Array) that can be programmed after the manufacture of the LSI or a reconfigurable processor in which the connections and the settings of circuit cells disposed inside the LSI can be reconfigured may be used. The present disclosure can be realized as digital processing or analogue processing.

If future integrated circuit technology replaces LSIs as a result of the advancement of semiconductor technology or other derivative technology, the functional blocks could be integrated using the future integrated circuit technology. Biotechnology can also be applied.

The present disclosure can be realized by any kind of apparatus, device or system having a function of communication, which is referred to as a communication apparatus. The communication apparatus may comprise a transceiver and processing/control circuitry. The transceiver may comprise and/or function as a receiver and a transmitter. The transceiver, as the transmitter and receiver, may include an RF (radio frequency) module and one or more antennas. The RF module may include an amplifier, an RF modulator/demodulator, or the like. Some non-limiting examples of such a communication apparatus include a phone (e.g., cellular (cell) phone, smart phone), a tablet, a personal computer (PC) (e.g., laptop, desktop, netbook), a camera (e.g., digital still/video camera), a digital player (digital audio/video player), a wearable device (e.g., wearable camera, smart watch, tracking device), a game console, a digital book reader, a telehealth/telemedicine (remote health and medicine) device, and a vehicle providing communication functionality (e.g., automotive, airplane, ship), and various combinations thereof.

The communication apparatus is not limited to be portable or movable, and may also include any kind of apparatus, device or system being non-portable or stationary, such as a smart home device (e.g., an appliance, lighting, smart meter, control panel), a vending machine, and any other "things" in a network of an "Internet of Things (IoT)."

The communication may include exchanging data through, for example, a cellular system, a wireless LAN system, a satellite system, etc., and various combinations thereof.

The communication apparatus may comprise a device such as a controller or a sensor which is coupled to a communication apparatus performing a function of communication described in the present disclosure. For example, the communication apparatus may comprise a controller or a sensor that generates control signals or data signals which are used by a communication apparatus performing a communication function of the communication apparatus.

The communication apparatus also may include an infrastructure facility, such as a base station, an access point, and any other apparatus, device or system that communicates with or controls apparatuses such as those in the above non-limiting examples.

Further, in recent years, Cyber Physical Systems (CPS), which is a new concept of creating new added value by information cooperation between a physical space and a cyber space in Internet of Things (IoT) technology, has attracted attention. Also in the above-described embodiment, this CPS concept can be adopted.

That is, as a basic configuration of the CPS, for example, an edge server disposed in the physical space and a cloud server disposed in the cyber space can be connected to each other via a network, and the processing can be distributed and processed by processors mounted on both servers. Here, it is preferable that each processing data generated in the edge server or the cloud server is generated on a standardized platform, and by using such a standardized platform, it is possible to improve the efficiency in a case of constructing a system including various and diverse sensor groups and IoT application software.

A communication apparatus according to one exemplary embodiment of the present disclosure includes: control circuitry, which, in operation, performs at least one setup of a setup of an Artificial Intelligence (Al)/Machine Learning (ML) model, a setup of a parameter of the AI/ML model, and a setup of data used in the AI/ML model in accordance with a type associated with sharing of information related to the AI/ML model between communication apparatuses; and transmission circuitry, which, in operation, transmits information corresponding to the at least one setup to another communication apparatus.

In one exemplary embodiment of the present disclosure, when performing the setup of the data used in the AI/ML model, the control circuitry performs the setup based on a correspondence relation among a plurality of use cases of the AI/ML model, a measurement element, and a conversion method for the measurement element.

In one exemplary embodiment of the present disclosure, the transmission circuitry transmits the information corresponding to the at least one setup by using an action frame; and the action frame has a category field set to a specific value.

In one exemplary embodiment of the present disclosure, the transmission circuitry transmits a management frame including information corresponding to the setup of the AI/ML model and the setup of the parameter of the AI/ML model when the control circuitry performs the setup of the AI/ML model and the setup of the parameter of the AI/ML model.

In one exemplary embodiment of the present disclosure, the transmission circuitry transmits a specific frame including information corresponding to the setup of the AI/ML model and the setup of the parameter of the AI/ML model when the control circuitry performs the setup of the AI/ML model and the setup of the parameter of the AI/ML model; and the specific frame has a subtype value or a control frame extension value of a frame control field set to a specific value.

In one exemplary embodiment of the present disclosure, the type is set from among a plurality of candidate types that differ from one another in at least one of presence or absence of transmission of information corresponding to the setup of the AI/ML model, presence or absence of transmission of information corresponding to the setup of the parameter of the AI/ML model, or presence or absence of transmission of information corresponding to the setup of the data used in the AI/ML model.

In one exemplary embodiment of the present disclosure, the control circuitry determines an output corresponding to a use case as a result of training or inference by the AI/ML model; and the transmission circuitry transmits the determined output to the other communication apparatus.

In one exemplary embodiment of the present disclosure, the control circuitry updates an operation related to communication based on update information when the update information is acquired from the other communication apparatus.

In a communication method according to one exemplary embodiment of the present disclosure, a communication apparatus performs at least one setup of a setup of an Artificial Intelligence (Al)/Machine Learning (ML) model, a setup of a parameter of the AI/ML model, and a setup of data used in the AI/ML model in accordance with a type associated with sharing of information related to the AI/ML model between communication apparatuses; and transmits information corresponding to the at least one setup.

The disclosure of Japanese Patent Application No. 2023-127890, filed on August 4, 2023, including the specification, drawings and abstract, is incorporated herein by reference in its entirety.

### Industrial Applicability

One exemplary embodiment of the present disclosure is useful for radio communication systems.

### Reference Signs List

100 Controller node (communication apparatus)
101, 201 Controller
102, 202 Radio transceiver
200 Controlled node (communication apparatus)

## Claims

1. A communication apparatus, comprising:
control circuitry, which, in operation, performs at least one setup of a setup of an Artificial Intelligence (Al)/Machine Learning (ML) model, a setup of a parameter of the AI/ML model, and a setup of data used in the AI/ML model in accordance with a type associated with sharing of information related to the AI/ML model between communication apparatuses; and
transmission circuitry, which, in operation, transmits information corresponding to the at least one setup to another communication apparatus.

2. The communication apparatus according to claim 1, wherein
when performing the setup of the data used in the AI/ML model, the control circuitry performs the setup based on a correspondence relation among a plurality of use cases of the AI/ML model, a measurement element, and a conversion method for the measurement element.

3. The communication apparatus according to claim 1, wherein:
the transmission circuitry transmits the information corresponding to the at least one setup by using an action frame; and
the action frame has a category field set to a specific value.

4. The communication apparatus according to claim 1, wherein
the transmission circuitry transmits a management frame including information corresponding to the setup of the AI/ML model and the setup of the parameter of the AI/ML model when the control circuitry performs the setup of the AI/ML model and the setup of the parameter of the AI/ML model.

5. The communication apparatus according to claim 1, wherein:
the transmission circuitry transmits a specific frame including information corresponding to the setup of the AI/ML model and the setup of the parameter of the AI/ML model when the control circuitry performs the setup of the AI/ML model and the setup of the parameter of the AI/ML model; and
the specific frame has a subtype value or a control frame extension value of a frame control field set to a specific value.

6. The communication apparatus according to claim 1, wherein
the type is set from among a plurality of candidate types that differ from one another in at least one of presence or absence of transmission of information corresponding to the setup of the AI/ML model, presence or absence of transmission of information corresponding to the setup of the parameter of the AI/ML model, or presence or absence of transmission of information corresponding to the setup of the data used in the AI/ML model.

7. The communication apparatus according to claim 1, wherein:
the control circuitry determines an output corresponding to a use case as a result of training or inference by the AI/ML model; and
the transmission circuitry transmits the determined output to the other communication apparatus.

8. The communication apparatus according to claim 1, wherein
the control circuitry updates an operation related to communication based on update information when the update information is acquired from the other communication apparatus.

9. A communication method for a communication apparatus, comprising:
performing at least one setup of a setup of an Artificial Intelligence (Al)/Machine Learning (ML) model, a setup of a parameter of the AI/ML model, and a setup of data used in the AI/ML model in accordance with a type associated with sharing of information related to the AI/ML model between communication apparatuses; and
transmitting information corresponding to the at least one setup.
